# EUROPEAN PATENT APPLICATION

(11) **EP 1 953 126 A2**
(43) Date of publication of application: **06.08.2008**
(21) Application number: 08381003.6
(22) Date of filing: 31.01.2008
(51) Int. Cl.: C05D 7/00, C05G 5/00

(54) **Effervescent fertilizer**

(30) Priority: 01.02.2007 ES 200700270
(71) Applicant: Sipcam Inagra, S.A., 46009 Valencia (ES)
(72) Inventor: Ruiz Garcia, Marta, 46009 Valencia (ES); Munoz Marques, Yolanda, 46009 Valencia (ES)
(74) Representative: Urizar Anasagasti, Jesus Maria

(57) **Abstract**

Effervescent fertilizer avoids the unnecessary mixing of products on the part of the user. Because it is so easy to use, the user can obtain the exact product mix, as the single-dose of instantly dissolving effervescent fertilizer is used with a specific amount of water that corresponds to the standard volume of a four litre watering can.

## Description

### OBJECT OF THE INVENTION.

The present invention patent refers to a new effervescent fertilizer, and aims to present a new fertilizer in single-doses for a specific amount of water.

### BEFORE THE INVENTION.

Until now, many different kinds of fertilizers have been available, all based on different chemical compositions and presented in powder, ball, or liquid form. The user can create different product mixes in order to obtain the final liquid application, yet this method proves difficult for the user. Not only do they have to directly manipulate the substances that compose the product, but find it difficult to obtain the exact product mix.

No fertilizer to date has had the unique characteristic of being supplied in a single-dose of instantly dissolving effervescent fertilizer, to be used in a specific volume of water equal to the standard volume of a four litre watering can.

At no time has there been reflected in the state of fertilizer technology a product available in instantly dissolving effervescent single-doses.

### DESCRIPTION OF THE INVENTION.

To alleviate or even eliminate the above mentioned problems, a new effervescent fertilizer is presented, the object of this invention patent, which basically consists of a tablet that instantly dissolves upon contact with water.

With this new effervescent fertilizer one gets the exact dose for a liquid application, regardless of the user or the means of dosage.

Direct contact with the substances that compose the product is avoided, so that the user is able to prepare the liquid dissolution fertilizer.

No residual mess is produced, given that the handling of the fertilizer for its liquid application does not generate any type of residual.

Other costly methods and processes are avoided while achieving the same result and a totally homogeneous product.

### PREFERIBLE PRODUCTION OF THE INVENTION

The effervescent fertilizer, object of the present invention patent, consists of a tablet that contains on one hand the fertilizer components and on the other the excipients needed in order to instantaneously dissolve through effervescence upon contact with water.

Once the nature and the way to use of the present invention is sufficiently described, the only thing left to add is that said invention can display certain variations in material and form, as long as said alterations do not substantially change the characteristics claimed below.

## Claims

1. Effervescent fertilizer is a tablet that contains fertilizer components and the excipients needed to produce instantaneously dissolution through effervescence.
